# EUROPÄISCHE PATENTANMELDUNG

(11) **EP 2 428 493 A1**
(43) Veröffentlichungstag der Anmeldung: **14.03.2012**
(21) Anmeldenummer: 10009322.8
(22) Anmeldetag: 08.09.2010
(51) Int. Cl.: C02F 11/06, F23G 7/00

(54) **Thermische Aufbereitung von Asche**

(71) Anmelder: Kalogeo Anlagenbau GmbH, 2544 Leobersdorf (AT)
(72) Erfinder: Ramharter, Peter Michael, Dr. Dipl. Ing., 2700 Wr. Neustadt (AT); Edlinger, Alfred, Dipl. Ing., 6780 Bartholomäberg (AT)

(57) **Zusammenfassung**

Die vorliegende Erfindung betrifft ein Verfahren zur thermischen Aufbereitung von Metall, Silizium und Phosphor enthaltender Asche, vorzugsweise Klärschlammasche, das folgende Schritte umfasst:
(1) Erhitzen der Asche mittels Induktionsheizung, gegebenenfalls unterstützt durch Teilverbrennung von Kohlenstoff, in einem Reaktor auf eine vorbestimmte Reaktionstemperatur, und
(2) Reduktion der Asche zu Eisenlegierungen, elementarem Phosphor, Schlacke, schwermetallreicher Staubfraktion und Restgas.

## Beschreibung

### Technisches Gebiet

Die Erfindung bezieht sich auf die thermische Aufbereitung von Aschen, und insbesondere von Metalle, Calcium, Silizium und Phosphor enthaltenden Klärschlammaschen aus MonoVerbrennungsanlagen, durch Reduktion von deren Inhaltsstoffen in einem Reaktor.

### Stand der Technik

Thermische Behandlung von Abfällen sowie Verfahren zur Durchführung derselben sind aus der Literatur umfassend bekannt. Entstehende Reaktionsprodukte weisen eine breit gefächerte Palette von Einsatzmöglichkeiten auf. Verbleibende Reststoffe werden nach unterschiedlichen Verfahren weiter aufbereitet. Insbesondere finden verbleibende Schlacken und/oder Aschen als Wertstoffe weitere Verwendung.

Ein beispielhaftes Verfahren zur Aufbereitung von Schlacke und/oder Asche aus der thermischen Behandlung von Müll ist in der EP 0 908 673 B1 offenbart, das im Wesentlichen auf eine Verringerung des Schwermetallgehaltes von Schlacke und/oder Asche aus der Müllverbrennung abzielt. Bei dem genanntem Verfahren fällt Schlacke an, die eine geringe Menge an Schadstoffen enthält. Allerdings ist zur Durchführung des Verfahrens Müllasche mit Restkohlenstoff notwendig. Die Erzeugung von Asche auf diese Weise weist eine schlechte Energiebilanz auf.

WO 2007/124527 A1 offenbart ein Verfahren zum Entfernen der Schwermetalle aus Asche, worin der Asche mit Zusätzen vermengt und anschließend zu Pellets verpresst wird. Die erhaltenen Pellets werden dann über einen Zeitraum von bis zu 30 Minuten einer Temperatur von ca. 1000°C ausgesetzt. Das Verfahren ist nicht auf die Rückgewinnung von einzelnen Wertstoffen aus Asche durch chemische Reduktion gerichtet, sondern betrifft ausschließlich die Komplettumwandlung der Asche zu Düngemitteln. Daher ist es beabsichtigt und gewünscht, dass der in der Asche enthaltene Phosphor im Endprodukt verbleibt.

EP 0 972 577 A1 beschreibt ein Verfahren zur Rückgewinnung von Phosphor aus organischen Schlämmen. Das genannte Verfahren enthält keine Offenbarung bezüglich der weiteren Verwendung der restlichen Inhaltsstoffe der Schlämme. Ein Wesenszug des Verfahrens ist es, hohe Temperaturen und damit ein Aufschmelzen der restlichen Inhaltsstoffe zu vermeiden.

Den bekannten Verfahren ist gemein, dass sie nur Teile der Inhaltsstoffe von Schlacken und/oder Aschen aufschließen und einer weiteren Verwendung zuführen. Des Weiteren erfolgt eine oft aufwendige Vorbereitung der zu behandelnden Schlacken und/oder Aschen.

### Darstellung der Erfindung

Aufgabe der Erfindung ist es, ein Verfahren zur Aufbereitung von Asche, vorzugsweise Klärschlammasche, sowie eine möglichst vollständige Aufschließung sämtlicher in der Asche enthaltenen Stoffe zur Erzeugung verwertbarer Produkte möglichst hoher Qualität bereitzustellen. Als Ausgangsmaterial wird vorzugsweise nicht vorbehandelte Asche verwendet, und insbesondere Klärschlammasche aus Monoverbrennungsanlagen. Dabei werden die in der Asche enthaltenen Komponenten in einem Reaktor bzw. Reduktionsofen zu Wertstoffen umgewandelt. Die gewonnenen Stoffe können an geeigneter Stelle in den jeweiligen Stoffkreislaufes wieder eingebracht werden, nach Möglichkeit in einem anfänglichen Stadium. Beispielsweise kann die gewonnene Ferrolegierung in der Stahlherstellung als Lieferant von Legierungselementen dienen und der gewonnene elementare Phosphor kann bei entsprechender Qualität direkt dem bei der Phosphorherstellung aus Phosphorerz erzeugten Phosphor zugemischt werden. Vorzugsweise erübrigt sich durch die vollständige Umsetzung der Inhaltsstoffe einerseits die kostenintensive Lagerung der Reststoffe. Ebenso soll vorzugsweise eine vorteilhafte Energiebilanz erzielt werden.

Erfindungsgemäß wird diese Aufgabe gelöst durch ein Verfahren zur thermischen Aufbereitung von Metall, Silizium und Phosphor enthaltender Asche, das folgende Schritte umfasst:
(1) Erhitzen der Asche mittels Induktionsheizung, gegebenenfalls unterstützt durch Teilverbrennung von Kohlenstoff, in einem Reaktor auf eine vorbestimmte Reaktionstemperatur, und
(2) Reduktion der Asche zu Eisenlegierungen, elementarem Phosphor, Schlacke, schwermetallreicher Staubfraktion und Restgas.

Sämtliche reduzierbaren Einsatzstoffe werden dabei reduziert. Als Einsatzstoffe versteht das Verfahren Asche, Kohlenstoffquellen, Zusatzstoffe zur Einstellung der Konzentrationen an Ca, Al und Si sowie Stickstoff, oder Sauerstoff oder Luft als Transportgas sowie zur partiellen Verbrennung. Geeignete Kohlenstoffquellen sind beispielsweise Kohle (Steinkohle, Koks, kontaminierte Aktivkohle). Geeignete Zusatzstoffe zur Einstellung der Konzentrationen an Ca, Al und Si sind beispielsweise Kalk, Kalkstein, Tone und Quarzsand.

Ein Vorteil des erfindungsgemäßen Verfahrens in einer bevorzugten Ausführungsform liegt darin, dass durch die gute Temperaturregelbarkeit einerseits und gegebenenfalls durch Teilverbrennung von Kohlenstoff bei geregelter Sauerstoffzufuhr andererseits bei Aufschließung der Asche eine Einstellung des Redox-Potentials im Reaktor erfolgt. Hierdurch kann die Reduktionsreaktion der Aschenbestandteile so gesteuert werden, daß die Bildung unerwünschter und die Ausbeute senkender Oxidationsprodukte minimiert werden kann. Durch die optionale Teilverbrennung von Kohlenstoff kann ferner elektrische Energie eingespart werden.

Die qualitative Zusammensetzung der entstehenden Stoffströme umfasst eine flüssige Eisenlegierungen wie Ferrosilizium oder Ferrophosphor, Flüssigschlacke wie Ca- Al- Silikate und Oxide sowie Dämpfe von Phosphor und Schwermetallen, gasförmige Anteile von Chloriden, Sulfiden sowie von CO, CO₂ und H₂.

Vorteilhafterweise haben Aschen aus der Monoverbrennung von Klärschlämmen einen hohen Anteil verwertbarer Elemente wie Ca, Si, Fe, P, jedoch einen relativ geringen Anteil an unerwünschten Elementen wie beispielsweise Schwermetalle.

Vorteilhafterweise umfasst das Verfahren ferner einen oder mehrere, vorzugsweise mehrere, und insbesondere bevorzugt alle der folgenden Schritte:
(i) Mischen und Homogenisieren der festen Einsatzstoffe vor dem Einbringen in den Reaktor;
(ii) Zuführen von Transportgas;
(iii) Reduktionreaktion, Einsatzstoffe und Reaktionsprodukte durchlaufen das induktionsbeheizte Reaktorbett im Gleichstrom
(iv) Abziehen der gasförmigen Reaktionsprodukte aus dem Reaktor mittels Unterdruck;
(v) Fraktioniertes Abscheiden der kondensierbaren Bestandteile der in Schritt (iv) abgezogenen gasförmigen Reaktionsprodukte (z.B. Schwermetalle und Phosphor) durch schrittweise Abkühlung und Abtrennung;
(vi) Zuführen des verbleibenden Restgases einer Nachverbrennung mit Rauchgasreinigung;
(viii) Abziehen der flüssigen Reaktionsprodukte Schlacke und Eisenlegierung aus dem Reaktor getrennt von den gasförmigen Reaktionsprodukten; vorzugsweise getrennt voneinander als separate flüssige Produktströme;
(ix) Abkühlen und Granulieren der Schlacke; vorzugsweise durch Eingießen der flüssigen Schlacke in ein Wasserbad; und
(x) Abgießen der flüssigen Eisenlegierung.

Durch Erhitzen des Reaktorinhalts unter reduzierenden Bedingungen auf eine Schmelztemperatur von 1450-1650°C werden die in der Asche enthaltenen Verbindungen getrennt und können als Metallschmelze (Eisenlegierung), flüssige Schlacke oder als gasförmiges Reduktionsprodukt (Rauchgas) abgezogen werden. Die gasförmigen Produkte können durch schrittweise Kondensation weiter aufgetrennt werden. Dadurch wird die weitere Behandlung der Reduktionsprodukte vereinfacht. Vorzugsweise wird der Reaktorinhalt auf eine Temperatur von 1500-1600 °C erhitzt, insbesondere bevorzug auf eine Temperatur von 1520°C oder darüber.

Vorteilhafterweise sieht das Verfahren (Si, Ca, Al)-quellen als Zusatzstoffe zur Steuerung der Basizität und Viskosität der Schlacke vor. Diese werden in entsprechenden Anteilen - je nach der chemischen Analyse der Asche - der Asche beigemengt. Ziel ist auch hier die bestmögliche Verwertung der in der Asche enthaltenen Wertstoffe, d.h. möglichst vollständige Umsetzung derselben unter Erhalt möglichst hochwertiger Produkte.

Der durch die Behandlung entstehende elementare Phosphor liegt im Wesentlichen in der Gasphase vor. Er kann aus dieser auskondensiert und als elementarer Grundstoff in die Phosphorverarbeitung recycliert werden.

Nach dem erfindungsgemäßen Verfahren werden die in den Reaktor eingebrachten Stoffe durch Induktionsenergie und, bei Bedarf, durch zusätzliche Teilverbrennung von Kohlenstoff auf die geeignete Reaktionstemperatur erhitzt. Das Verfahren wird in einem Induktionsofen durchgeführt, die bevorzugte Ausgestaltung dieses Ofens ermöglicht eine rasche Regelbarkeit der Reaktion und damit einen hohen Umsatz der Reduktionsreaktion. Es können Einsatzstoffe mit unterschiedlichen Zusammensetzungen verarbeitet werden.

Erfindungsgemäß bevorzugt wird die durch die Reduktion erhaltene flüssige Schlacke in einem Wasserbad granuliert. Die ebenfalls anfallende flüssige Eisenlegierung wird vorzugsweise in ein Sandbett oder in Kokillen abgegossen. Das Granulieren erfolgt vorzugsweise durch schlagartiges Abkühlen, wodurch ein amorphes Erstarren der Schlackenschmelze bewirkt wird. Daraus resultiert eine Verbesserung der hydraulischen Eigenschaften, was für die Verwendung der Schlacke als Baustoff, insbesondere in der Zementherstellung, von Vorteil ist.

Ein weiterer Vorteil des erfindungsgemäßen Verfahrens liegt darin, dass in einer bevorzugten Ausführungsform bei der Abkühlung des Rauchgases die Schwermetalle, Salze sowie Phosphor daraus auskondensiert und abgetrennt werden können. Wird die Abkühlung des Rauchgases in kontrollierter Weise durchgeführt, können nacheinander die Schwermetalle, Salze und Phosphor separat kondensiert und abgetrennt werden. Da unter praktischen Bedingungen jedoch keine vollständige Gleichgewichtseinstellung in den einzelnen Kondensationsschritten erreicht wird, ist die Trennschärfe beschränkt. In Abhängigkeit von den gewählten Bedingungen wird in der Praxis daher eine mehr oder weniger reduzierte Trennschärfe zu erwarten sein.

Die Schwermetalle werden durch Abkühlung des Rauchgases kondensiert und vorzugsweise als Staub in einem Filter abgeschieden und abgetrennt. Durch anschließende weitere Abkühlung des Rauchgases kann elementarer flüssiger Phosphor abgeschieden und separiert werden. Vorzugweise erfolgt das Abkühlen und Abscheiden von Phosphor aus dem Rauchgas in einer Sprühkolonne, in der das Rauchgas auf eine Temperatur im Bereich von 50-90°C, vorzugsweise ca. 70°C, abgekühlt und der Phosphor flüssig abgeschieden. Dabei sammelt sich der Phosphor im Sumpf der Kolonne. Darüber befindet sich eine Schicht aus Phosphorschlamm.

Vorteilhafterweise wird das nach der Phosphorabtrennung verbleibende Rauchgas, bei Bedarf nach Vorwärmung, einer Nachverbrennung mit nachgeschalteter Rauchgasreinigung zugeführt. Dadurch entfällt der Aufwand für eine separate Rauchgasreinigung. Als Befeuerung für die Vorwärmung und/oder Nachverbrennung kann in Abhängigkeit von den örtlichen Gegebenheiten im Umfeld der zur Durchführung des erfindungsgemäßen Verfahrens verwendeten Anlage ein Drehrohrofen, ein Hochofen oder auch die Klärschlammverbrennung dienen.

### Beschreibung der Verfahrensschemata

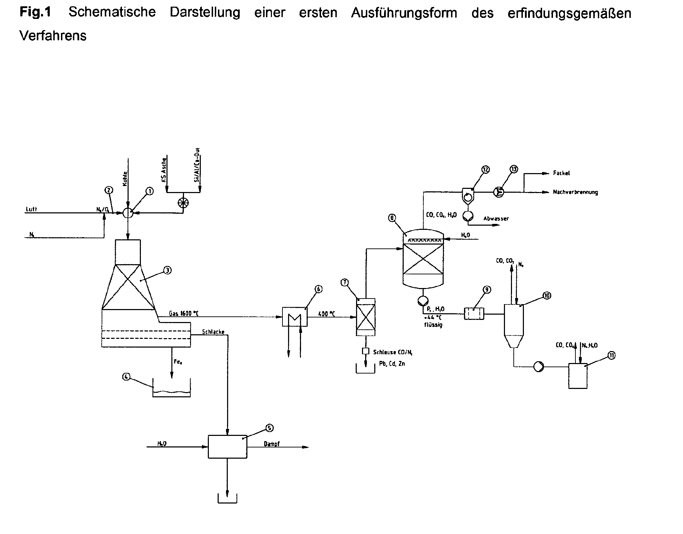

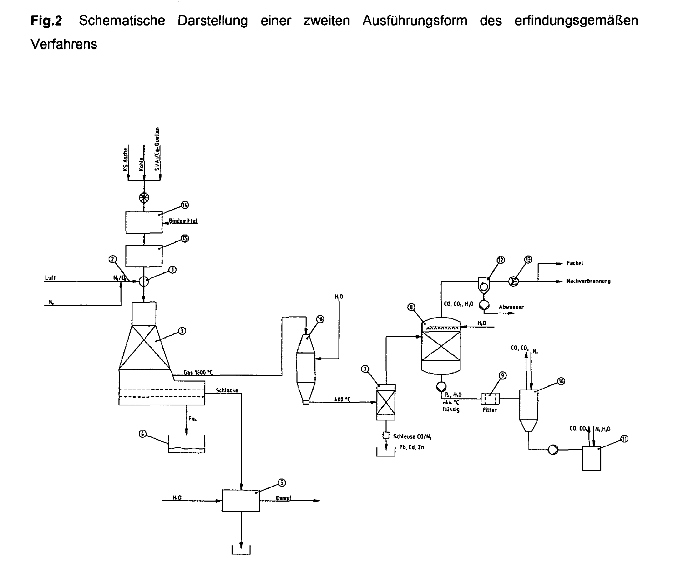

Die Erfindung wird anhand von Ausführungsbeispielen beschrieben, die in den Verfahrensschemata gemäß den beigefügten Figuren dargestellt sind. Darin zeigt Fig.1 eine erste Ausführungsform und Fig.2 eine zweite Ausführungsform des erfindungsgemäßen Verfahrens.

Die Bezugszeichen in den Figuren 1 und 2 haben die folgenden Bedeutungen:

| | | | |
|---|---|---|---|
| (1) | Mischer/Injektor | (9) | Filter |
| (2) | Luft, N₂ Dosierung | (10) | Lagertank |
| (3) | Reaktor | (11) | Transporttank |
| (4) | Sandbett | (12) | Zyklon |
| (5) | Granulierung | (13) | Saugzugventilator |
| (6) | Wärmetauscher | (14) | Granulierer |
| (7) | Rauchgasfilter | (15) | Trockner |
| (8) | Sprühkolonne | (16) | Verdampfungskühler |

### Beschreibung der Schnittzeichnung des Induktionsofens

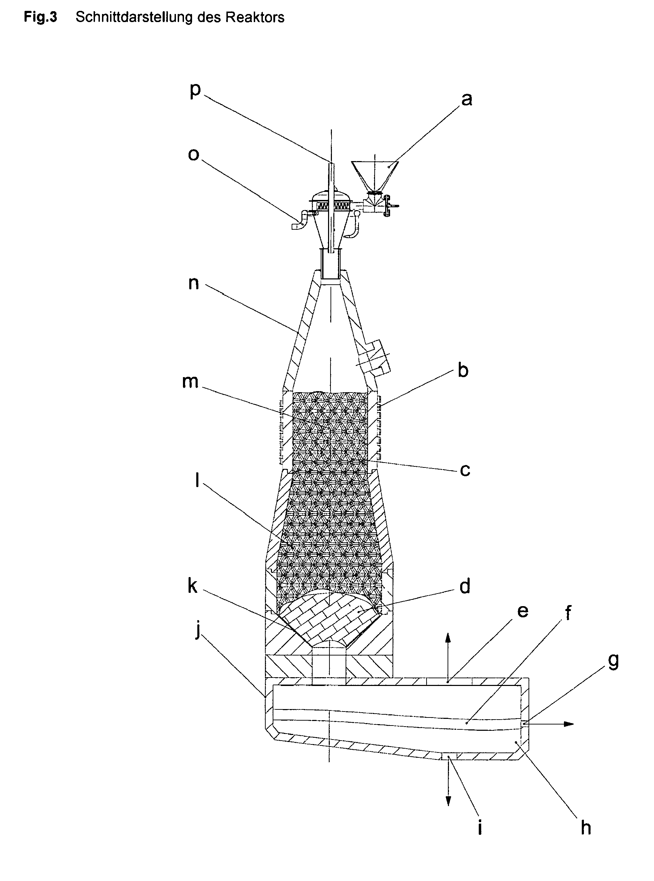

Der im erfindungsgemäßen Verfahren eingesetzte Induktionsofen wird anhand einer Schnittzeichnung beschrieben, die schematisch in Fig.3 dargestellt ist.

Die Bezugszeichen in Figur 3 haben die folgenden Bedeutungen:
(a) Eintrag 1
(b) Induktionsheizung, Cu-Spule
(c) Induktionskohlenstoff
(d) Feuerfest-Schüttung, Stützgewölbe
(e) Gasaustritt
(f) Schlackenschmelze
(g) Abstich seitlich
(h) Roheisenschmelze
(i) Abstich unten
(j) Unterofen
(k) Konfusor
(l) Agglomerisationszone
(m) Reaktionszone
(n) Diffusor
(o) Luft, N₂ Dosierung
(p) Eintrag 2

### Detaillierte Beschreibung der Erfindung

Die Erfindung wird anhand der in den Fig. 1 und 2 skizzierten bevorzugten Ausführungsbeispielen und der Schnittzeichnung Fig. 3 näher erläutert.

### Erste beispielhafte erfindungsgemäße Ausführungsform

Gemäß der in Fig. 1 gezeigten ersten Ausführungsform wird z.B. nicht vorbehandelte Asche aus einer Monoverbrennungsanlage von Klärschlamm zusammen mit weiteren Zusatzstoffen, die als (Si, Ca, Al)-quellen dienen, homogenisiert und einem vorzugsweise leckluftarmen Mischer/Injektor (1) zugeführt. Weiters wird ein als Kohlenstoffquelle dienender Stoffstrom, z.B. Kohle, dem Mischer/Injektor (1) zugeführt. Diese Kombination aus Asche, Zusatzstoffen und Kohle bildet die Einsatzstoffe.

Die chemische Zusammensetzung der Schlacke kann entsprechend den gewünschten Produktvorgaben eingestellt werden. Sande, Tone und Kalk, die als (Si, Ca, Al)-quellen dienen, werden der Klärschlammasche beigemischt. Die Rezeptur der Zusatzstoffe wird entsprechend der Elementanalyse der Klärschlammasche und der gewünschten Zusammensetzung der Schlacke festgelegt. Damit lässt sich ein weiter Bereich des Dreistoffsystems SiO₂-CaO-Al₂O₃ abdecken. Auf diese Weise sind die Basizität (Massenverhältnis CaO/SiO₂) der Schlacke und die Viskosität der Schlackenschmelze einstellbar.

Eine beispielhafte, die vorliegende Erfindung in keiner Weise beschränkende Zusammensetzung von Klärschlammasche aus der Verbrennung in einer kommunalen Kläranlage ist nachfolgend angegeben:

| Bestandteil | Gew.-% | Bestandteil | Gew.-% | Bestandteil | Gew.-% |
|---|---|---|---|---|---|
| Al₂O₃ | 5.8 | CuO | 0.15 | PbO | 0.03 |
| AS₂O₃ | 0.007 | Fe₃O₄ | 17.8 | SO₃ | 2.1 |
| Br | 0.001 | K | 2.4 | SiO₂ | 11.3 |
| CaO | 43.6 | MgO | 2.0 | SnO | 0.008 |
| CdO | 0.14 | MnO | 0.24 | SrO | 0.092 |
| Cl | 0.024 | Na | 0.28 | TiO₂ | 1.1 |
| CoO | 0.042 | NiO | 0.024 | ZnO | 0.68 |
| Cr₂O₃ | 0.042 | P₂O₅ | 12.1 | ZrO₂ | 0.038 |

Die staubförmigen oder körnigen Einsatzstoffe werden über den Mischer/Injektor (1) dem Reaktor (3) zugeführt und durchlaufen diesen zusammen mit den Reaktionsprodukten im Gleichstromprinzip. Der Durchsatz eines jeden Stoffstromes wird getrennt geregelt. Luft oder Stickstoff (2) wird dem Reaktor (3) sowohl zur Unterstützung der Energiezufuhr als auch als Transportgas zugeführt. Die Einsatzstoffe werden im Diffusor (n) auf den Querschnitt verteilt und in das Trägerbett (Koks oder Graphit als Induktionskohlenstoff (c)) des Reaktors (3) hineingesaugt und gelangen so in die Reaktionszone (m) des Reaktors. An der großen Oberfläche des Reaktorbettes erfolgt die Erwärmung der Einsatzstoffe gefolgt von der Reduktion der in der Asche enthaltenen Verbindungen.

Die für die Reduktion notwendige Temperatur liegt in Abhängigkeit von der Zusammensetzung der Asche im Bereich von 1450-1650°C, vorzugsweise 1500-1600°C, und weiter bevorzugt mindestens 1520°C. Die berührungslose Energiezufuhr von außen in das Reaktorbett erfolgt induktiv über eine mit Hochfrequenzspannung beaufschlagte Kupferspule (b). Unterstützend kann eine partielle Verbrennung von zugeführtem Kohlenstoff durch Zufuhr von Sauerstoff einen Beitrag zur Aufheizung des Reaktors leisten. Das Redox-Potential im Reaktor kann sowohl über Temperaturregelung der Induktionsheizung als auch über die geregelte Sauerstoffzufuhr und die partielle Verbrennung von zugeführtem Kohlenstoff in gewünschter Weise eingestellt werden. Dadurch ist ein Anpassen der Reaktionsbedingungen auf die eingesetzte Asche und deren Zusatzstoffe möglich.

Durch die große Oberfläche des Reaktorbettes mit einer gleichmäßigen radialen Temperaturverteilung und der genau regelbaren Leistung der Induktionsheizung kann die Reduktionsreaktion gut gesteuert werden. Durch das Vermeiden von Temperaturspitzen in Verbindung mit dem einstellbaren Redox-potential ergibt sich ein hoher Umsatz der Reduktionsreaktion. Vorteilhaft bezüglich Wärmeübergang ist das Aufschmelzen der flüssigen Reaktionsprodukte in kleinen Tröpfchen.

Der Reaktor lässt es auch zu, dass die Reduktion der Ausgangsstoffe auch unter ausschließlicher Zufuhr von Inertgas, z.B. Stickstoff, erfolgt. Nach der Reduktion der in der Asche enthaltenen Einsatzstoffe fallen flüssige Stoffe wie Eisenlegierungen in Form von Ferrosilizium und Ferrophosphor und Schlacke (Ca- Al- Silikate und Oxide) sowie gasförmige Stoffe wie Phosphor, Schwermetalle, Salze, Sulfide, CO, CO₂ und H₂ an.

Die flüssigen Reaktionsprodukte agglomerieren im Unterteil des Reaktorbettes (l) und fließen durch das Reaktorbett und fallen tropfenförmig in den Unterofen des Reaktors (j) Dort erfolgt die Phasentrennung zwischen flüssiger Schlacke (f) und flüssiger Ferrolegierung (h). Vorteilhaft für die Phasentrennung ist die Ruhe im Unterofen, die herabfallenden Tropfen bewirken wenig Rückvermischung. Die flüssigen Reduktionsprodukte verlassen den Reaktor getrennt über die Abstichöffnungen (g, i) und kontinuierlich. Die Eisenlegierung wird in ein Sandbett (4) oder in Kokillen (4) abgegossen und die Schlacke wird in einem Granulierer (5), hier einem Wasserbad, granuliert. Der dabei entstehende Wasserdampf wird abgeführt und kondensiert. Der durch das Wasserbad geschaffene hohe Abkühlgradient bewirkt amorphes Erstarren, wodurch die hydraulischen Eigenschaften der Schlacke verbessert werden. Das ermöglicht den Einsatz der Schlacke in der Zementherstellung.

Die gasförmigen Produkte (Rauchgase) verlassen das Reaktorbett ebenfalls nach unten (Gleichstrom) und werden mit einer Temperatur von 1450-1650°C, vorzugsweise 1500-1600° C abgezogen (e). Um die Gase sicher aus dem Reaktor zu entfernen zu können ist das oben erwähnte Transportgas (o) und ein durch den Saugzugventilator (13) erzeugter Unterdruck notwendig. Die abgezogenen Rauchgase werden in Folge abgekühlt. Dabei fallen mit sinkender Temperatur nacheinander die Schwermetalle, Salze und Phosphor aus. Da in den einzelnen Schritten der Kondensation aus dem Rauchgas keine vollständige Gleichgewichtseinstellung zu erwarten ist, kann man von einer reduzierten Trennschärfe ausgehen. Die Rauchgase werden über ein wassergekühltes, nicht dargestelltes Rohr in einen Hochtemperaturwärmetauscher (6) geführt. Diesen verlässt das Rauchgas mit einer Temperatur von 400° C und wird in Folge einem Filter (7) zugeführt. Hier erfolgt die Abscheidung der Stäube sowie der Aerosole. Durch die Abscheidung der Stäube kann die Verunreinigung der Phosphorfraktion mit Schwermetallen verringert werden. Die Abscheidung erfolgt über einen keramischen Filter oder ein Elektrofilter.

Das den Filter (7) verlassende Rauchgas wird in einer Sprühkolonne (8) weiter auf 50-90 °C, vorzugsweise ca. 70°C, abgekühlt. Der Phosphor kondensiert aus und wird flüssig abgeschieden. Er sammelt sich im Sumpf der Kolonne unter einer sich ebenfalls bildenden Schicht aus Phosphorschlamm. Der flüssige Phosphor kann dann mittels einer Pumpe über einen Filter in einen Lagertank (10) gepumpt und danach in Transporttanks (11) abgefüllt werden. Die Phosphortanks besitzen üblicherweise ein System zur Inertisierung der Gasphase und zur Spülung und Überdeckung des Phosphors mit Wasser.

Im weiteren Verlauf der Behandlung des Rauchgases wird das den Sprühturm (8) verlassende restliche Rauchgas einem Zyklon (12) zugeführt. Hier wird es von den mitgerissenen Wassertröpfchen befreit und das anfallende Abwasser wird abgeführt. Das gesamte System wird durch einen Saugzugventilator (13) auf Unterdruck gehalten.

Vorzugsweise wird das Rauchgas schließlich in eine Nachverbrennung mit nachgeschalteter Rauchgasreinigung, beispielsweise in eine Klärschlammverbrennungsanlage, eingebracht. Eine gesonderte Rauchgasreinigung kann daher entfallen. Falls das Rauchgas nicht in die Nachverbrennung geleitet werden kann sollte eine Fackel als Notsystem vorgesehen werden.

### Zweite beispielhafte erfindungsgemäße Ausführungsform

Gemäß der in Fig. 2 gezeigten, zweiten Ausführungsform erfolgt die Aufgabe der Einsatzstoffe einschließlich der Kohlenstoffquelle über einen Granulierer (14) mit Zusatz eines Bindemittels mit anschließender Trocknung (15) anstatt dem Eintragesystem für staubartige Stoffe.

Bei dieser Variante wird der Hochtemperaturwärmetauscher (6) durch einen Verdampfungskühler (16) ersetzt. Die Kühlwirkung des Verdampfungskühlers (16) kann durch die Menge an eingedüstem Wasser gesteuert werden.

## Patentansprüche

1. Verfahren zur thermischen Aufbereitung von Metall, Calcium, Silizium und Phosphor enthaltender Asche, vorzugsweise Klärschlammasche, das folgende Schritte umfasst:
(1) Erhitzen der Asche mittels Induktionsheizung, gegebenenfalls unterstützt durch Teilverbrennung von Kohlenstoff, in einem Reaktor auf eine vorbestimmte Reaktionstemperatur, und
(2) Reduktion der Asche zu Eisenlegierungen, elementarem Phosphor, Schlacke, schwermetallreicher Staubfraktion und Restgas.

2. Verfahren nach Anspruch 1, worin die Asche eine nicht vorbehandelte Klärschlammasche ist.

3. Verfahren nach Anspruch 1 oder 2 , worin die Asche vollständig zu Eisenlegierungen, elementarem Phosphor, Schlacke, schwermetallreicher Staubfraktion und Restgas umgesetzt wird.

4. Verfahren nach mindestens einem der vorhergehenden Ansprüche, worin die vorbestimmte Reaktionstemperatur im Bereich von 1450-1650°C liegt, vorzugsweise im Bereich von 1500-1600°C.

5. Verfahren nach mindestens einem der vorhergehenden Ansprüche, worin die Asche vor dem Einbringen in den Reaktor mit weiteren Zusatzstoffen zur Einstellung der Konzentrationen an Ca, Al und Si vermischt und zusammen mit einer Kohlenstoffquelle dem Reaktor zugeführt wird.

6. Verfahren nach mindestens einem der vorhergehenden Ansprüche, worin mindestens ein Gas, ausgewählt aus Stickstoff, Sauerstoff, Luft und Mischungen daraus, in den Reaktor eingeführt wird.

7. Verfahren nach mindestens einem der vorhergehenden Ansprüche, worin die Einstellung des zur Reduktion der Asche erforderlichen Redox-Potentials im Reaktor durch die Regelung der Reaktortemperatur, der Verbrennung von Kohlenstoff und der Sauerstoffzufuhr erfolgt.

8. Verfahren nach mindestens einem der vorhergehenden Ansprüche, worin die gasförmigen Reaktionsprodukte als Rauchgas aus dem Reaktor mittels Unterdruck abgezogen werden.

9. Verfahren nach Anspruch 8, worin kondensierbare Bestandteile wie Schwermetalldampf und Phosphordampf durch schrittweise Abkühlung und Abtrennung fraktioniert aus dem Rauchgas abgeschieden werden.

10. Verfahren nach Anspruch 8 oder 9, worin die Schwermetalle durch Abkühlung des Rauchgases als Staub kondensiert und in einem Filter abgeschieden werden.

11. Verfahren nach mindestens einem der Ansprüche 8-10, worin durch Abkühlen des Rauchgases, vorzugsweise in einer Sprühkolonne, elementarer Phosphor flüssig abgeschieden wird.

12. Verfahren nach mindestens einem der Ansprüche 8-11, worin das Rauchgas, gegebenenfalls nach Abtrennung kondensierbarer Bestandteile, einer Nachverbrennung mit anschließender Rauchgasreinigung zugeführt wird.

13. Verfahren nach mindestens einem der vorhergehenden Ansprüche, worin die flüssigen Reaktionsprodukte Schlacke und Eisenlegierungen getrennt von den gasförmigen Reaktionsprodukten aus dem Reaktor abgezogen werden.

14. Verfahren nach mindestens einem der vorhergehenden Ansprüche, worin
(a) die entstehende flüssige Schlacke in einem Wasserbad granuliert wird, und/oder
(b) die entstehende flüssigen Eisenlegierungen in ein Sandbett oder in Kokillen abgegossen werden.

15. Verfahren nach mindestens einem der vorhergehenden Ansprüche, das in geeigneter Reihenfolge und/oder soweit möglich gleichzeitig die folgenden Verfahrensschritte umfasst:
(i) Mischen und Homogenisieren der festen Einsatzstoffe vor dem Einbringen in den Reaktor;
(ii) Zuführen von Transportgas;
(iii) Abziehen der gasförmigen Reaktionsprodukte aus dem Reaktor mittels Unterdruck;
(iv) Fraktioniertes Abscheiden der kondensierbaren Bestandteile der in Schritt (iii) abgezogenen gasförmigen Reaktionsprodukte Schwermetalle und Phosphor durch schrittweise Abkühlung und Abtrennung;
(v) Zuführen des verbleibenden Restgases einer Nachverbrennung mit Rauchgasreinigung;
(vi) Abziehen der flüssigen Reaktionsprodukte Schlacke und Eisenlegierung aus dem Reaktor getrennt von den gasförmigen Reaktionsprodukten und vorzugsweise getrennt voneinander als separate flüssige Produktströme;
(viii) Abkühlen und Granulieren der Schlacke, vorzugsweise durch Eingießen der flüssigen Schlacke in ein Wasserbad; und
(ix) Abgießen der flüssigen Eisenlegierung.
